# FASCICULE DE BREVET EUROPEEN

(11) **EP 2 154 865 B1**
(45) Date de publication et mention de la délivrance du brevet: **25.05.2016**
(21) Numéro de dépôt: 09167575.1
(22) Date de dépôt: 10.08.2009
(51) Int. Cl.: H04B 7/185, H04L 12/54, H04L 12/66, H04L 29/08

(54) **Système hybride de communication ACARS**
Hybridsystem für ACARS(Aircraft Communication Addressing and Reporting System)-Kommunikation
ACARS hybrid communication system

(30) Priorité: 13.08.2008 FR 0855564
(43) Date de publication de la demande: 17.02.2010
(73) Titulaire: Airbus Operations, 31060 Toulouse (FR)
(72) Inventeur: Gruyer, Pierre, 31100 TOULOUSE (FR); Rose, David, 31530 LEVIGNAC (FR); Servieres-Bordes, Christophe, 31470 SAINT-LYS (FR)
(74) Mandataire: Augarde, Eric

(56) Documents cités:
- EP-A- 1 916 781
- EP-A- 2 023 685
- EP-A2- 2 201 703
- WO-A-02/079918
- WO-A-2006/026632
- WO-A-2009/030681
- WO-A2-2009/047297
- FR-A- 2 787 658
- US-A1- 2005 286 452

## Description

### DOMAINE TECHNIQUE

La présente invention concerne de manière générale le domaine des télécommunications avioniques et plus particulièrement celui des systèmes de communication ACARS *(Aircraft Communication and Reporting System).*

### ÉTAT DE LA TECHNIQUE ANTÉRIEURE

Dans le domaine aéronautique, le système ACARS permet de transmettre des données entre un aéronef et une station au sol, notamment d'échanger des informations de type AOC (*Aeronautical Operational Control*) avec les opérateurs de compagnies aériennes et des informations de type ATC (*Air Traffic Control*) avec les contrôleurs aériens. La liaison de données entre le bord et le sol est généralement désignée par le terme générique de « datalink ».

Le système ACARS peut utiliser plusieurs types de support de transmission (également dénommés « média » dans l'état de la technique) ou, plus exactement, plusieurs types de sous-réseau pour transmettre les données, à savoir des sous-réseaux HF, VHF ou SATCOM. De manière connue en soi, le sous-réseau de télécommunication VHF permet des liaisons point à point en ligne de visée directe mais à portée réduite avec des émetteurs/récepteurs au sol. Le sous-réseau satellitaire SATCOM fournit par contre une couverture mondiale, à l'exception des zones polaires, mais avec des coûts de communication élevés. Le sous-réseau HF permet quant à lui de couvrir les zones polaires.

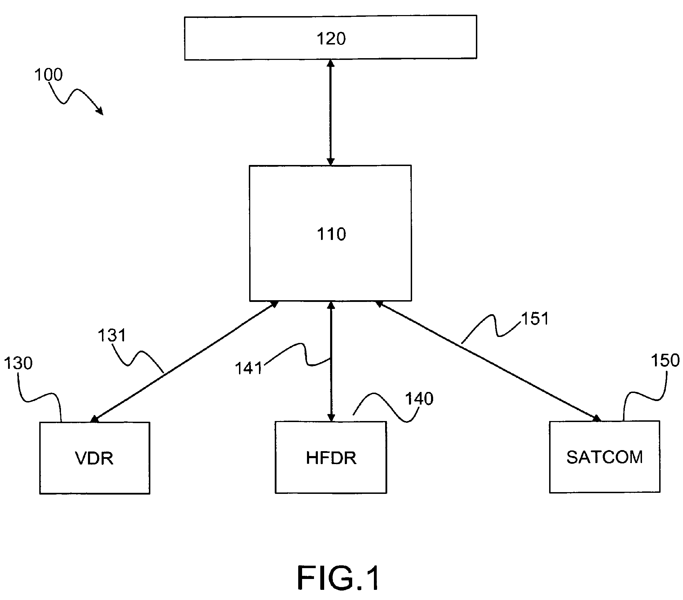

On a représenté en Fig. 1 un système de communication ACARS, 100, connu de l'état de la technique. Celui-ci comprend généralement un routeur, 110, dit routeur ACARS, qui se présente sous la forme d'un équipement de gestion des communications ou CMU (*Communications Management Unit*). Le routeur 110 sélectionne automatiquement le support de transmission le mieux approprié (VHF, HF, SATCOM) en fonction d'un certain nombre de paramètres (type de communication, lieu où se trouve l'aéronef etc.). Selon l'état de ces paramètres, le routeur 110 aiguille les messages ACARS qu'il reçoit des applications avioniques 120, vers un module 130 d'émission/réception VHF encore dénommé VDR (VHF Data Radio), un module 140 d'émission/réception HF encore dénommé HFDR (HF Data Radio) ou encore vers un module 150 d'émission/réception SATCOM. Réciproquement, le routeur 110 transmet les messages ACARS reçus des modules 130, 140, 150 vers les applications avioniques 120 précitées. Les bus de données 131, 141 et 151 entre le routeur 110 et les modules d'émission/réception respectifs 130, 140, 150 sont conformes au standard ARINC 429 et les messages ACARS échangés sur ces liaisons obéissent au format ARINC 618.

Les supports de transmission précités commencent toutefois à atteindre leurs limites en termes de disponibilité d'accès alors même que les besoins de communication entre l'aéronef et le sol sont de plus en plus importants. En outre, les coûts de communication qu'engendrent les volumes de plus en plus élevés de données à transmettre grèvent les budgets des compagnies aériennes.

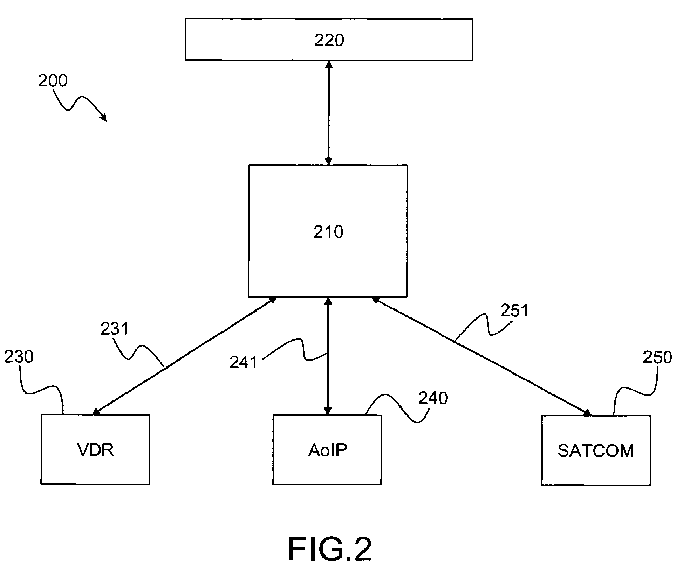

Pour remédier à cette situation, certains acteurs du domaine aéronautique ont proposé d'utiliser des supports de transmission grand public pour transmettre les messages ACARS. Ainsi, lorsque l'aéronef stationne ou roule au sol, voire lorsqu'il est en phase d'approche, celui-ci peut établir une connexion par liaison sans fil avec le centre opérationnel de la compagnie aérienne, via le réseau GPRS ou UMTS, une borne Wi-Fi, ou une station Wi-Max. La transmission des messages ACARS est effectuée en les encapsulant dans des datagrammes IP, comme décrit par exemple dans la demande WO2006/026632. Cette technique de transmission est dénommée ACARS sur IP ou encore AoIP (ACARS over IP). D'autres systèmes similaires sont décrits dans les demandes EP 1916781, FR 2727658 et WO 2006/026632. La Fig. 2 représente un système de communication ACARS, 200, utilisant une technique de transmission AoIP. Comme précédemment, le système comprend un routeur ACARS 210 qui transmet les messages ACARS reçus d'applications avioniques 220 à des modules d'émission/réception VHF, HF, SATCOM désignés respectivement par 230, 240, 250, et, réciproquement renvoie les messages ACARS reçus de ces mêmes modules aux applications avioniques concernées. Un des modules d'émission/réception conventionnels (ici, le module HFDR) de la Fig. 1 a été remplacé par une passerelle de conversion AoIP, 240. Cette passerelle reçoit, via le bus 241, des messages ACARS au format ARINC 618, les encapsule dans des datagrammes IP avant de les transmettre sur une liaison sans fil au moyen d'une pile de protocole TCP/IP. Réciproquement, elle reçoit des datagrammes IP, par exemple d'un centre de contrôle de trafic aérien (ATC) ou d'un opérateur de compagnie aérienne (AOC), décapsule les messages ACARS et les transmet au routeur 210.

Etant donné que les interfaces ARINC 429 d'un routeur ACARS sont généralement déjà toutes reliées à un support de transmission conventionnel, la mise en place d'une passerelle de conversion AoIP nécessite de sacrifier un support traditionnel au profit d'une transmission sur IP. Alternativement, il serait envisageable de développer des routeurs ACARS comportant un plus grand nombre d'interfaces ARINC 429 pour remplacer les routeurs existants. Toutefois, cette solution s'avérerait coûteuse pour mettre à niveau les aéronefs existants (retrofit). Quand bien même le routeur disposerait d'une interface ARINC 429 surnuméraire pour pouvoir connecter la passerelle AoIP, le logiciel de routage devrait être modifié pour router les messages de ou à destination de la passerelle, ce qui nécessiterait obligatoirement une nouvelle certification du routeur.

Le problème à la base de l'invention est donc de proposer un système de communication ACARS capable d'utiliser une transmission sur IP tout en conservant la possibilité de transmettre sur tous les supports de transmission traditionnels mais sans nécessiter le remplacement du routeur ACARS existant.

### EXPOSÉ DE L'INVENTION

La présente invention est définie par un système de communication par messages ACARS selon la revendication 1 destiné à être embarqué sur un aéronef.

L'invention concerne également un aéronef selon la revendication 7 équipé d'un système de communication par messages ACARS tel que défini ci-dessus.

### BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :
La Fig. 1 représente schématiquement un premier système de communication par messages ACARS connu de l'état de la technique ;
La Fig. 2 représente schématiquement un second système de communication par messages ACARS connu de l'état de la technique ;
La Fig. 3A représente schématiquement un système de communication par messages ACARS selon un premier mode de réalisation de l'invention ;
La Fig. 3B représente schématiquement un système de communication par messages ACARS selon un second mode de réalisation de l'invention ;
La Fig. 4 représente schématiquement le détail du commutateur de la Fig. 3A.

### EXPOSÉ DÉTAILLÉ DE MODES DE RÉALISATION PARTICULIERS

L'invention part de la constatation que les supports de transmission GPRS, UMTS, Wi-Fi, Wi-Max ou autres supports de transmission grand public ne peuvent être utilisés qu'à proximité du sol, c'est-à-dire lorsque l'avion stationne ou roule sur le sol ou encore lorsqu'il est en phase d'approche. Dans ces mêmes circonstances, certains supports de transmission traditionnels ne sont pas ou guère utilisables, soit pour des raisons de sécurité (HF), soit parce que le coût de la communication serait comparativement beaucoup trop élevé (SATCOM).

L'idée à la base de l'invention est d'adjoindre un commutateur voire d'exploiter un commutateur existant du système de communication ACARS de sorte qu'une des liaisons ARINC 429 du routeur ACARS puisse être commutée soit vers un support de transmission traditionnel (HF, SATCOM) soit vers une passerelle de conversion AoIP, la position du commutateur étant contrôlée directement ou indirectement par un capteur capable de détecter si l'aéronef est situé au sol ou à proximité du sol.

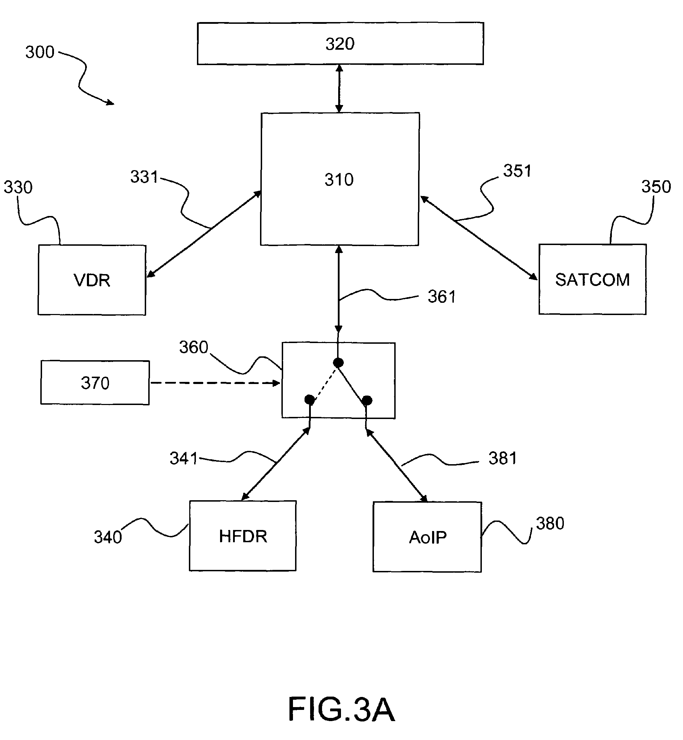

La Fig. 3A représente un système de communication ACARS selon un premier mode de réalisation de l'invention.

Ce système de communication, 300, comprend comme dans l'art antérieur, un routeur ACARS 310, relié à une pluralité de modules d'émission/réception VHF, HF et SATCOM, respectivement désignés par 330, 340 et 350. Il comprend en outre, de manière originale, un commutateur, 360, relié d'une part au routeur 310 et d'autre part au module d'émission/réception 340 ainsi qu'à une passerelle de conversion AoIP, 380. Les liaisons entre le routeur et les modules d'émission/réception ou la passerelle de conversion sont bidirectionnelles et réalisées au moyen d'une paire de bus unidirectionnels, de directions opposées et conformes au standard ARINC 429. Plus précisément, la liaison bidirectionnelle entre le module d'émission/réception 330 et le commutateur est désignée par 331. De même, la liaison bidirectionnelle entre la passerelle 380 et le commutateur est désignée par 381. Ces deux liaisons bidirectionnelles sont commutées sur une liaison bidirectionnelle unique, 361, également constituée d'une paire de bus ARINC 429, reliant le commutateur 360 et le routeur 310. La passerelle AoIP est elle-même reliée à un module d'émission/réception (non représenté) utilisant un support de transmission sans fil de type grand public (GPRS, UMTS, Wi-Fi, Wi-Max etc.), de manière connue en soi.

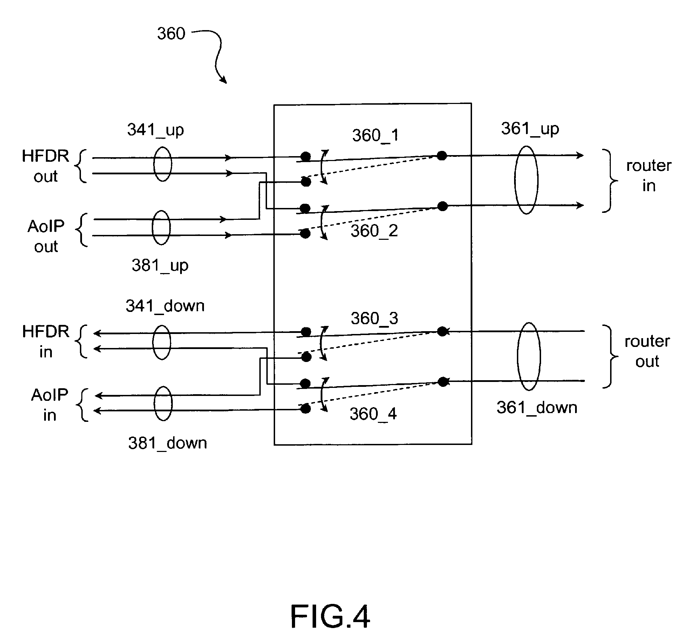

La structure du commutateur 360 est illustrée en Fig. 4. La liaison bidirectionnelle 361 est constituée par deux bus unidirectionnels 361_up et 361_down, tous deux conformes à la norme ARINC 429 et correspondant respectivement à la voie montante et la voie descendante. De manière similaire, la liaison bidirectionnelles 341 (resp. 381) est constituée de deux bus unidirectionnels 341_up (resp. 381_up) et 341_down (resp. 381_down). Chaque bus unidirectionnel précité est constitué par une paire de fils conducteurs. Le commutateur 360 comprend quatre commutateurs élémentaires SPDT (Single Pole Double Throw), 360_1 à 360_4, commutant chacun un des fils conducteurs. Les commutateurs élémentaires 360_1 et 360_2 sont adaptés à commuter la voie descendante vers l'entrée du module HF ou celle de la passerelle 380. Les commutateurs élémentaires 360_3 et 360_4 sont adaptés à commuter la sortie du module HF ou celle de la passerelle 380 sur la voie montante. Les commutateurs élémentaires sont commandés simultanément et prennent la même position de commutation (haute et basse). La position représentée en Fig. 4 par un trait continu correspond à un aéronef en phase de vol.

Le commutateur est commandé en fonction de l'état d'un capteur de proximité au sol, 370. Plus précisément, si le capteur indique que l'aéronef est situé au sol ou à moins d'une distance prédéterminée du sol, le commutateur est dans une première position reliant le routeur 310 à la passerelle 380. A l'inverse, lorsque le capteur 370 indique que l'aéronef est en phase de vol, le commutateur est dans une seconde position reliant le routeur 310 au module HF 330. Le commutateur peut être commandé directement par le capteur, comme représenté en Fig. 3A. Il peut alternativement être commandé via un dispositif de contrôle ou un autre équipement avionique.

Le capteur 370 peut être réalisé selon différentes variantes. Selon une première variante, le capteur 370 est un capteur dit WOW (Weight On Wheels) qui indique si le poids de l'appareil s'exerce sur les roues, autrement dit s'il est au sol. Ce capteur est généralement disponible sur la plupart des aéronefs et fait partie de l'unité de contrôle du système d'atterrissage ou LGCIU (Landing Gear Control Interface Unit). Selon une seconde variante, le capteur 370 est un télémètre capable de déterminer la distance au sol de l'aéronef et de la comparer à une hauteur prédéterminée, cette hauteur étant choisie pour correspondre à la phase d'approche d'une piste d'atterrissage. Selon une troisième variante, le capteur détecte si la porte de l'aéronef est ouverte, autrement dit, si l'aéronef stationne au sol et en phase d'embarquement ou de débarquement de passagers. Selon une quatrième variante, le capteur détecte que tous les moteurs de l'aéronef sont éteints. L'homme du métier pourra mettre en oeuvre d'autres variantes, notamment des combinaisons des capteurs précités, sans pour autant sortir du cadre de la présente invention.

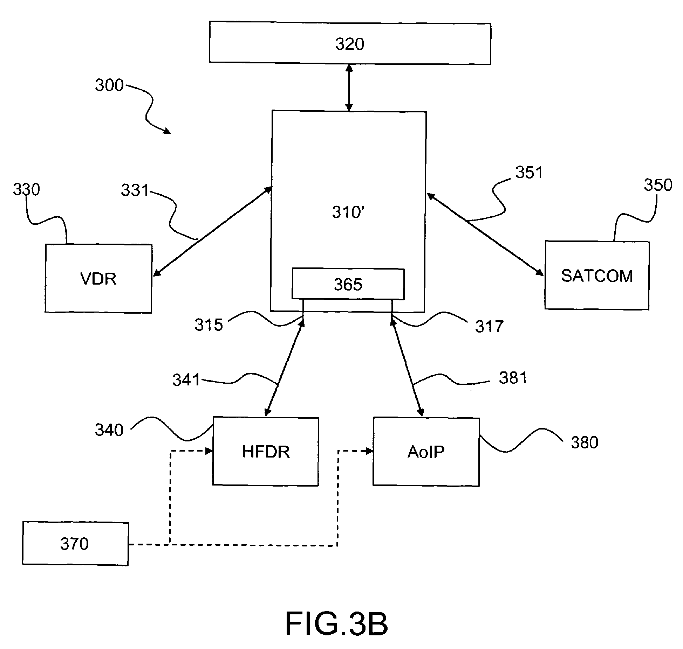

La Fig. 3B représente un système de communication ACARS selon un second mode de réalisation de l'invention. Les éléments identiques à ceux du premier mode de réalisation sont désignés par des numéros de référence identiques.

Ce second mode de réalisation peut être mis en oeuvre lorsque le routeur ACARS, désigné ici par 310', dispose d'un commutateur interne 365 permettant de sélectionner un module d'émission/réception HF principal (ou « maître »), ou un module/réception HF auxiliaire (ou « esclave »). Le routeur 310' possède deux entrées/sorties commutées 315, 317 (deux interfaces ARINC 429) permettant de connecter respectivement les modules d'émission/réception HF principal et auxiliaire grâce à des liaisons bidirectionnelles constituées chacune par des paires de bus unidirectionnels au standard ARINC 429.

Lorsque le routeur ACARS est équipé d'un tel commutateur interne, la passerelle de conversion AoIP, 380, est connectée à une première entrée/sortie commutée, par exemple à 317 par une première liaison bidirectionelle, 381, et le module d'émission/réception HF, 340, est connecté à une seconde entrée/sortie commutée, par exemple à 315, par une seconde liaison bidirectionnelle, 341.

Le module d'émission/réception HF 340 et la passerelle de conversion AoIP 380 sont tous deux reliés au capteur 370 décrit plus haut. Lorsque ce dernier signale que l'avion est au sol ou à proximité du sol, la passerelle de conversion 380 se déclare au routeur comme étant « maître » et le module HF 340 comme étant « esclave ». Le routeur place alors le commutateur interne 365 dans une position où l'entrée/sortie 317 (reliée à la passerelle) est active et l'entrée/sortie 315 (reliée au module HF) est inhibée. A l'inverse, lorsque le capteur signale que l'aéronef est en phase de vol, le module HF 340 se déclare au routeur comme étant « maître » et la passerelle de conversion 380 comme étant « esclave ». Le routeur place alors le commutateur interne 365 dans une position de commutation où l'entrée/sortie 315 (reliée au module HF) est active et l'entrée/sortie 317 (reliée à la passerelle) est inhibée.

Selon une variante non représentée, le module d'émission/réception HF 340 et la passerelle de conversion AoIP 380 ne sont pas commandés directement par le capteur 370 mais indirectement par un dispositif de contrôle ou un autre équipement avionique relié au capteur.

Selon une autre variante, également non représentée, si le routeur dispose d'une prise de contrôle externe, le commutateur interne du routeur peut être commandé directement par le capteur ou indirectement par un dispositif de contrôle lui-même relié à ce dernier.

L'invention a été décrite dans le cas où le commutateur externe ou interne commute un module d'émission/réception HF et une passerelle de conversion AoIP. L'homme du métier comprendra toutefois que l'invention pourra être réalisée de manière similaire si ce commutateur commute un module d'émission/ réception SATCOM et une passerelle de conversion AoIP.

## Revendications

1. Système de communication par messages ACARS destiné à être embarqué sur un aéronef, ledit système comprenant un routeur (310, 310'). adapté à router lesdits messages de et à destination d'une pluralité de sous-réseaux VHF, HF, SATCOM, comprenant un commutateur (360, 365) et une passerelle de conversion AoIP (380), le commutateur étant relié à un module d'émission/réception HF ou SATCOM (340, 350) à l'aide d'une première liaison bidirectionnelle (341, 351), et à ladite passerelle AoIP à l'aide d'une seconde liaison bidirectionnelle (381), **caractérisé en ce que** le commutateur étant en outre relié au routeur par une troisième liaison bidirectionnelle unique (361), le commutateur étant adapté à commuter la troisième liaison bidirectionnelle unique sur la première liaison bidirectionnelle lorsqu'il est dans un première position de commutation et sur la seconde liaison bidirectionnelle lorsqu'il est dans une seconde position de commutation, le commutateur étant dans la seconde position de commutation si l'aéronef est au sol ou à moins d'une distance prédéterminée du sol et dans la première position de commutation, sinon.

2. Système de communication selon la revendication 1, **caractérisé en ce qu'**il comprend un capteur adapté à déterminer si le poids de l'aéronef s'exerce sur ses roues.

3. Système de communication selon la revendication 1, **caractérisé en ce qu'**il comprend un capteur adapté à détecter si la porte de l'aéronef est ouverte ou fermée.

4. Système de communication selon la revendication 1, **caractérisé en ce qu'**il comprend un capteur adapté à mesurer la distance de l'aéronef au sol et à la comparer à ladite valeur prédéterminée.

5. Système de communication selon la revendication 1, **caractérisé en ce qu'**il comprend un capteur adapté à déterminer si les moteurs de l'aéronef sont éteints ou non.

6. Système de communication selon l'une des revendications précédentes, **caractérisé en ce que** les première et seconde liaisons bidirectionnelles sont chacune constituée d'une paire de bus unidirectionnels conformes à la norme ARINC 429 et de directions opposées.

7. Aéronef équipé d'un système de communication par messages ACARS selon l'une des revendications précédentes.

## Patentansprüche

1. System zur Kommunikation mittels ACARS-Meldungen, das dazu bestimmt ist, an Bord eines Luftfahrzeugs angeordnet zu werden, wobei das System einen Router (310, 310') umfasst, der angepasst ist, um die Meldungen von und zu einer Vielzahl von VHF-, HF-, SATCOM-Teilnetzwerken zu routen, das einen Umschalter (360, 365) und ein AolP-Umwandlungs-Gateway (380) umfasst, wobei der Umschalter mit einem HF- oder SATCOM-Sender/Empfänger-Modul (340, 350) mithilfe einer ersten bidirektionalen Verbindung (341, 351) und mit dem AolP-Gateway mithilfe einer zweiten bidirektionalen Verbindung (381) verbunden ist, **dadurch gekennzeichnet, dass** der Umschalter ferner mit dem Router mithilfe einer dritten einmaligen bidirektionalen Verbindung (361) verbunden ist, wobei der Umschalter angepasst ist, um die dritte einmalige bidirektionale Verbindung auf die erste bidirektionale Verbindung umzuschalten, wenn er sich in einer ersten Umschaltposition befindet, und auf die zweite bidirektionale Verbindung, wenn er sich in einer zweiten Umschaltposition befindet, wobei sich der Umschalter in der zweiten Umschaltposition befindet, wenn sich das Luftfahrzeug am Boden oder unterhalb eines vorbestimmten Abstands vom Boden befindet, und sich andernfalls in der ersten Umschaltposition befindet.

2. Kommunikationssystem nach Anspruch 1, **dadurch gekennzeichnet, dass** es einen Sensor aufweist, der angepasst ist, um zu bestimmen, ob das Gewicht des Luftfahrzeugs auf seine Räder ausgeübt wird.

3. Kommunikationssystem nach Anspruch 1, **dadurch gekennzeichnet, dass** es einen Sensor aufweist, der angepasst ist, um zu erfassen, ob die Tür des Luftfahrzeugs offen oder geschlossen ist.

4. Kommunikationssystem nach Anspruch 1, **dadurch gekennzeichnet, dass** es einen Sensor aufweist, der angepasst ist, um den Abstand des Luftfahrzeugs zum Boden zu messen und ihn mit dem vorbestimmten Wert zu vergleichen.

5. Kommunikationssystem nach Anspruch 1, **dadurch gekennzeichnet, dass** es einen Sensor aufweist, der angepasst ist, um zu bestimmen, ob die Motoren des Luftfahrzeugs ausgeschaltet sind oder nicht.

6. Kommunikationssystem nach einem der vorhergehenden Ansprüche, **dadurch gekennzeichnet, dass** die erste und die zweite bidirektionale Verbindung jeweils aus einem Paar von unidirektionalen und gegenläufig ausgerichteten Bussen gemäß der Norm ARINC 429 bestehen.

7. Luftfahrzeug, das mit einem System zur Kommunikation mittels ACARS-Meldungen nach einem der vorhergehenden Ansprüche ausgestattet ist.

## Claims

1. Communication system via ACARS messages intended to be placed onboard an aircraft, said system comprising a router (310, 310') adapted to route said messages from and to a plurality of VHF, HF, SATCOM sub-networks, a switch (360, 365) and an AolP conversion gateway (380), the switch being connected to an HF or SATCOM transceiver module (340, 350) by means of a first two-way link (341, 351), and to said AolP gateway by means of a second two-way link (381), **characterized by** the switch being connected to the router by a third single two-way link, the switch being adapted to switch said third single two-way link to the first two-way link when it lies in a first switch position, and to the second two-way link when it lies in a second switch position, the switch being in the second switch position if the aircraft is on the ground or less than a predetermined distance from the ground, otherwise it lies in the first switch position.

2. Communication system according to claim 1, **characterized in that** it comprises a sensor adapted to determine whether the weight of the aircraft is on its wheels.

3. Communication system according to claim 1, **characterized in that** it comprises a sensor adapted to detect whether the door of the aircraft is open or closed.

4. Communication system according to claim 1, **characterized in that** it comprises a sensor adapted to measure the distance of the aircraft from the ground and of comparing this distance with said predetermined value.

5. Communication system according to claim 1, **characterized in that** it comprises a sensor adapted to determine whether the aircraft engines are or are not switched off.

6. Communication system according to any of the preceding claims, **characterized in that** the first and second two-way links each consist of a pair of unidirectional buses conforming to standard ARINC 429 and of opposite directions.

7. Aircraft equipped with a communication system via ACARS messages according to any of the preceding claims.
